# EUROPÄISCHE PATENTANMELDUNG

(11) **EP 2 390 085 A1**
(43) Veröffentlichungstag der Anmeldung: **30.11.2011**
(21) Anmeldenummer: 11004334.6
(22) Anmeldetag: 26.05.2011
(51) Int. Cl.: B29C 63/34, B65D 90/04

(54) **Verfahren zum Auskleiden eines zylinderischen Lagerbehälters und danach hergestellter Lagerbehälter**

(30) Priorität: 27.05.2010 DE 102010021690
(71) Anmelder: Fenotec GmbH, 14547 Beelitz (DE)
(72) Erfinder: Janek, Thomas, 16761 Henningsdorf (DE)
(74) Vertreter: Erb, Henning

(57) **Zusammenfassung**

Es geht um ein Verfahren zum Auskleiden eines zylindrischen Lagerbehälters (10) mit einem druckbeständigen Vlies (18) und einer Innenhülle (20). Dabei wird die Vliesauskleidung (18) zylindrisch und mit einem Loch zum Durchstecken eines Domhalses (22) der Innenhülle (20) vorkonfektioniert und axial ausgerichtet in den Lagerbehälter (10) eingelegt. Anschließend wird eine zylindrisch geformte Innenhülle (20) in die Vliesauskleidung (18) eingelegt, mit dem Domhals (22) durch das Loch gesteckt und aufgeblasen. Dadurch wird die Vliesauskleidung (18) rundum an der zylindrischen Umfangswand (11) zur Anlage gebracht. Danach wird der Ringspalt zwischen dem Domhals (22) und dem Dom (16) des Lagerbehälters (10) abgedichtet.

## Beschreibung

Die Erfindung betrifft ein Verfahren zum Auskleiden eines zylindrischen Lagerbehälters, z. B. eines Öl- oder Benzintanks, aus Stahlblech oder Kunststoff, mit einem druckbeständigen Vlies und einer Innenhülle. Die Erfindung betrifft weiterhin einen nach diesem Verfahren hergestellten Lagerbehälter.

Üblicherweise werden bisher die Tankwände mit einer Zwischenlage aus Vliesplatten ausgekleidet, bevor die Innenhülle in den Tank eingebracht wird, vgl. DE 76 00 784 U. Der Zwischenraum zwischen der Innenhülle und der Tankwand kann zur Überwachung der Dichtheit unter einem schwachen Vakuum gehalten werden. Die Vliesplatten werden rundum an den Innenwänden des Tanks befestigt, und zwar entweder mittels Magneten oder durch Haftmittel. Beide Arten von Befestigungen haben Nachteile. Magnete haften nur an sauberem Stahl. Korrosion, Restöl oder eine Beschichtung verringern oder verhindern die Haftung der Magnete. Wenn dies dazu führt, dass einzelne Vliesplatten noch vor dem Aufblasen der Innenhülle herabfallen, können sie auch noch benachbarte Vliesplatten lösen.

Die Verwendung von Haftmitteln zur Befestigung von Vliesplatten oder -bahnen ist zeitaufwendig. Außerdem ist die Anwendung lösemittelhaltiger Kleber in Tanks problematisch.

Aus der DE 102 55 220 A1 ist auch schon bekannt, einen quaderförmigen Lagerbehälter in der Weise auszukleiden, dass zunächst ein vorkonfektionierter Bodenbelag und eine ein- oder zweiteilige, vorkonfektionierte Wandbahn aus druckbeständigem Vlies mit allseitigem Überstand an den Boden bzw. die Wände angelegt werden, wobei die umgekantete Wandbahn durch ihre Steifigkeit an der Wand hält, allerdings das Einbringen der verhältnismäßig steifen Boden- und Wandbahnen sowie ihre vielfachen Umkantungen im Tank schwierig und ebenfalls zeitaufwendig sind. Nach der Montage der Vliesauskleidung am Boden und an den Wänden wird die Innenhülle in den Tank eingeführt und auf dem Boden ausgebreitet. Anschließend wird eine vorkonfektionierte Vliesdecke auf die Innenhülle gelegt und dann durch deren Aufpumpen gegen die Decke des Tanks zur Anlage gebraucht. Somit müssen immer noch fünf von sechs Begrenzungswänden des Tanks von Hand mit Vliesmaterial verkleidet werden, bevor die Innenhülle und die Vliesdecke in den Tank eingeführt werden können.

Der Erfindung liegt die Aufgabe zugrunde, speziell für zylindrische Lagerbehälter ein besonders einfaches Verfahren zur Auskleidung mit einer Vliesschicht und einer Innenhülle zur Verfügung zu stellen, und diese Aufgabe wird erfindungsgemäß dadurch gelöst, dass die an der zylindrischen Umfangswand zur Anlage kommende Vliesauskleidung zylindrisch vorkonfektioniert und mit einem Loch zum Durchstecken eines Domhalses der Innenhülle versehen und axial ausgerichtet in den Lagerbehälter eingelegt wird, anschließend eine zylindrisch geformte Innenhülle in die vorkonfektionierte Vliesauskleidung eingelegt, mit dem Domhals durch das Loch gesteckt und aufgeblasen wird, so dass die Vliesauskleidung durch die Innenhülle rundum an der zylindrischen Umfangswand zur Anlage gebracht wird, und danach der Ringspalt zwischen dem Domhals und dem Dom des Lagerbehälters abgedichtet wird. Die Anbringung des Lochs kann im Werk oder an der Baustelle erfolgen. Wie ersichtlich, ist die Anwendung der Erfindung auf bestimmte Lagerbehälter beschränkt. Auf ihrem begrenzten Anwendungsgebiet wirkt sie sich aber sehr vorteilhaft aus, weil der gesamte Arbeitsvorgang der manuellen Auskleidung der gesamten Umfangswand inklusive Boden und Decke entfällt. Vorzugsweise wird sogar die zylindrische Vliesauskleidung mit Endwänden vorkonfektioniert, so dass auch die Klöpperböden oder sonstigen Endwände des Lagerbehälters gleichzeitig mit der Umfangswand mit einer Vliesschicht belegt werden, wenn die Innenhülle aufgepumpt wird.

Obgleich die rundum geschlossene und axial zusammenhängende Form der Vliesauskleidung bevorzugt ist, besteht auch die Möglichkeit, die zylindrische Vliesauskleidung mit einem Längsschlitz und/oder mit einem oder mehreren Umfangsschlitzen zu konfektionieren. Es bedarf dann lediglich größerer Aufmerksamkeit, dass die Vliesauskleidung beim Aufpumpen der Innenhülle in die richtige Lage kommt.

Schließlich zielt die Erfindung auch auf das Verfahrensergebnis, nämlich einen ausgekleideten Lagerbehälter, bei dem die Vliesauskleidung nur durch Eigengewicht und die Innenhülle sowie ggf. Unterdruck im Zwischenraum zwischen der Innenhülle und der Umfangswand des Lagerbehälters an dieser gehalten ist.

Die Erfindung wird nachstehend anhand mehrerer in der Zeichnung dargestellter Ausführungsbeispiele näher erläutert. Es zeigen:
- Fig. 1: einen vereinfachten Längsschnitt durch einen zylindrischen Lagerbehälter mit einer erfindungsgemäßen Auskleidung in einem Zwischenstadium der Montage;
- Fig. 2: einen Querschnitt durch den Lagerbehälter nach Fig. 1;
- Fig. 3: einen Querschnitt durch den Lagerbehälter nach Fig. 1 und 2 im fertig montierten Zustand;
- Fig. 4: eine vereinfachte perspektivische Ansicht einer vor dem Einbau in den Lagerbehälter nach Fig. 1 bis 3 konfektionierten Vliesschicht;
- Fig. 5: eine perspektivische Darstellung einer vorkonfektionierten Vliesauskleidung ähnlich Fig. 4, jedoch ohne Endwände;
- Fig. 6: eine perspektivische Darstellung einer Vliesauskleidung ähnlich Fig. 5, jedoch mit einem axialen Längsschnitt im untersten Bereich;
- Fig. 7: in perspektivischer Darstellung eine Vliesauskleidung ähnlich Fig. 4 und 5, jedoch mit zwei mit Zwischenabstand angeordneten Umfangsschlitzen und
- Fig. 8: in perspektivischer Darstellung eine Vliesauskleidung ähnlich Fig. 6, jedoch zusätzlich mit einem Umfangsschlitz.

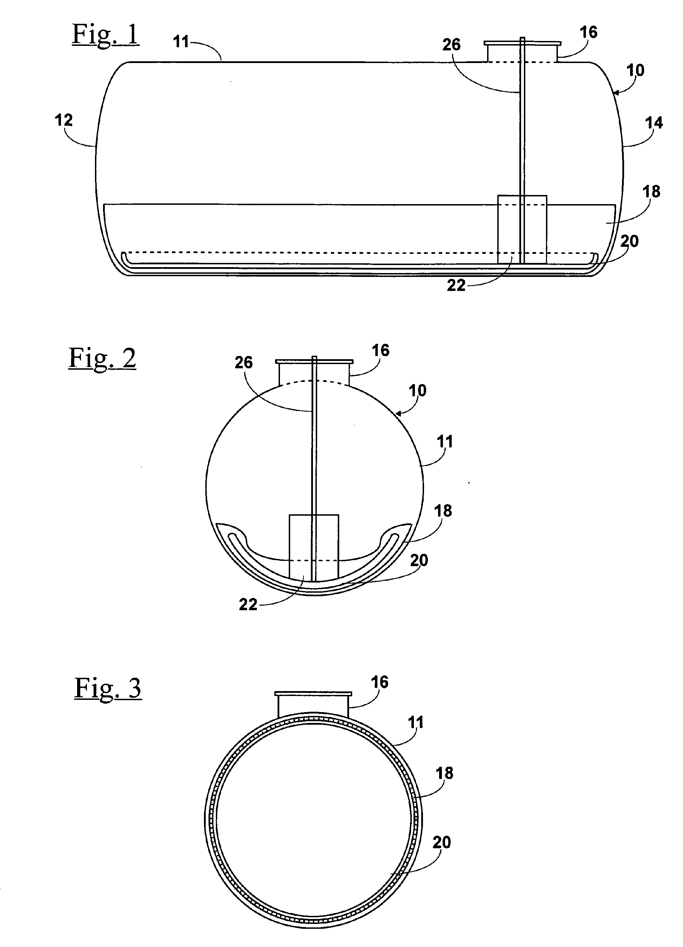

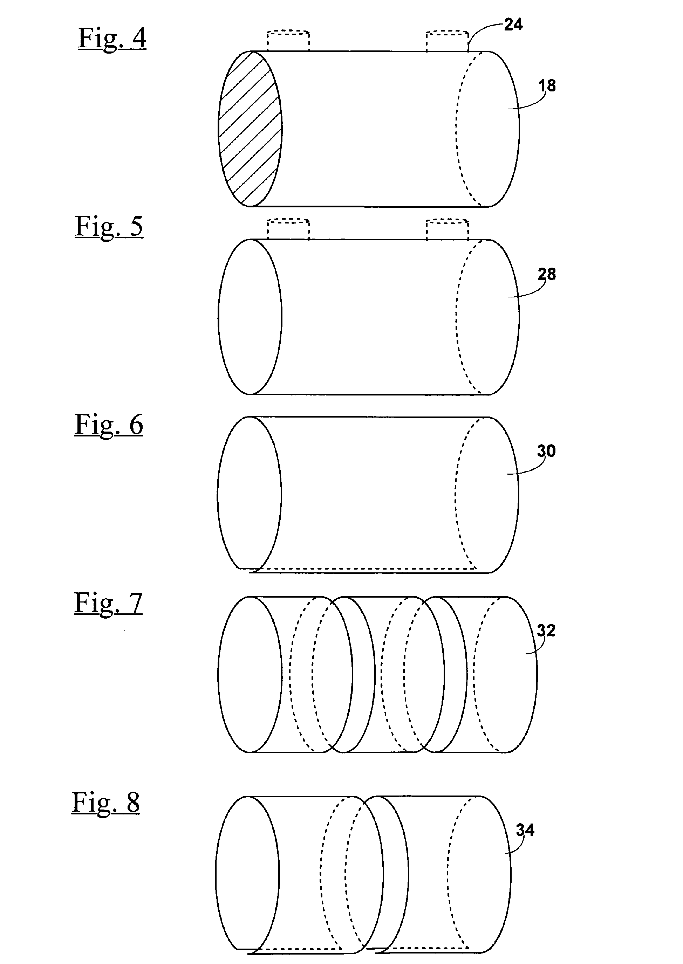

Der in Fig. 1 bis 3 gezeigte Tank 10 hat eine zylindrische Umfangswand 11 und auswärts gewölbte Klöpperböden 12, 14 an den axialen Enden. An der Oberseite befindet sich ein Dom 16. Durch ihn kann man Gegenstände in den Tank 10 einführen und zu Montage- und Wartungszwecken in den Tank einsteigen. In dem in Fig. 1 und 2 gezeigten Zwischenstadium ist eine zylindrisch vorkonfektionierte Vliesauskleidung 18 gemäß Fig. 4 und eine zylindrisch geformte Innenhülle 20 mit einem Domhals 22 durch den Dom 16 hindurch in den Tank 10 eingeführt worden und auf dem Boden des Tanks axial ausgerichtet abgelegt worden. Im Tank 10 wurde die Innenhülle 20 durch ein ggf. mit einem Domhals 24 versehenes Loch in der Umfangswand der zylindrisch vorkonfektionierten Vliesauskleidung 18 gemäß Fig. 4 in deren Innenraum eingeführt, so dass sich in dem in Fig. 1 und 2 gezeigten Zustand die Innenhülle 20 bereits im Innenraum der Vliesauskleidung 18 befindet. Nunmehr kann durch einen durch den Dom 16 in den Tank 10 eingeführten Gebläseschlauch 26, der über den Domhals 22 an die Innenhülle 20 angeschlossen wird, Druckluft in die Innenhülle 20 gepumpt werden. Während sich die Innenhülle 20 soweit ausdehnt, bis sie gemäß Fig. 3 den gesamten Innenraum des Tanks 10 ausfüllt, entfaltet sie auch die Vliesauskleidung 18, bis diese allseitig an der Umfangswand 11 und den Klöpperböden 12, 14 des Tanks 10 anliegt.

Manche Lagerbehälter 10 haben zwei Dome 16. Dann kann auch die Vliesauskleidung 18 gemäß Fig. 4 zwei Domhälse 24 haben.

Wenn man bei der Auskleidung des Tanks so vorgeht, wie vorstehend im Zusammenhang mit Fig. 1 bis 3 beschrieben, ergeben sich im Vergleich zum Stand der Technik folgende Vorteile:
Es sind keine lösemittelhaltigen Haftmittel notwendig. Es gibt auch keine eventuell herabfallenden Platten bzw. Tafeln aus Vliesmaterial. Es fällt kein Verschnitt an, und es gibt auch keine Überkopfarbeiten im Tank. Die Auskleidung der Umfangswand des Tanks kann in sehr viel kürzerer Zeit erledigt werden. Dabei werden mit größerer Sicherheit Fehlstellen und Überlappungen in der Zwischenlage aus Vliesmaterial vermieden.

In den Figuren 5 bis 8 sind noch einige Varianten möglicher Vliesauskleidungen gezeigt. Die in Fig. 5 dargestellte, zylindrisch vorkonfektionierte Vliesauskleidung 28 hat im Gegensatz zu der nach Fig. 4 keine Endwände. Das erleichtert das Einbringen der Innenhülle 20 durch eine der großen Öffnungen an den Enden. Andererseits müssen die Klöpperböden 12, 14 in herkömmlicher Weise manuell ausgekleidet werden.

Die in Fig. 6 gezeigte, mit 30 bezeichnete Ausführung einer Vliesauskleidung unterscheidet sich von der nach Fig. 5 nur dadurch, dass sie im unteren Bereich mit einem Längsschlitz versehen ist. Hier muss mit etwas größerer Sorgfalt gearbeitet werden, um eine saubere Anlage der Vliesschicht an der Wand des Tanks zu erreichen.

Die insgesamt mit 32 bezeichnete Vliesauskleidung nach Fig. 7 besteht aus drei nebeneinander angeordneten Ringabschnitten. Sie kommt z. B. bei langen Lagerbehältern mit einer verhältnismäßig kleinen Zugangsöffnung zur Anwendung.

Schließlich zeigt die in Fig. 8 dargestellte, insgesamt mit 34 bezeichnete Ausführung einer Vliesauskleidung zwei durch einen Umfangsschlitz getrennte Ringabschnitte, die jeweils im unteren Bereich einen Längsschlitz aufweisen. Wie auch bei den anderen mit Längs- und/oder Umfangsschlitzen versehenen Ausführungen sind die Anforderungen an die ordnungsgemäße Montage etwas höher als bei der Vliesauskleidung 18 nach Fig. 4, sie stellen aber ebenfalls eine Lösung der Erfindungsaufgabe dar.

## Patentansprüche

1. Verfahren zum Auskleiden eines zylindrischen Lagerbehälters (10), z. B. eines Öl- oder Benzintanks, aus Stahlblech oder Kunststoff, mit einem druckbeständigen Vlies (18) und einer Innenhülle (20), **dadurch gekennzeichnet, dass** die an der zylindrischen Umfangswand (11) des Lagerbehälters (10) zur Anlage kommende Vliesauskleidung (18) zylindrisch vorkonfektioniert und mit einem Loch (24) zum Durchstecken eines Domhalses (22) der Innenhülle (20) versehen und axial ausgerichtet in den Lagerbehälter (10) eingelegt wird, anschließend eine zylindrisch geformte Innenhülle (20) in die vorkonfektionierte Vliesauskleidung (18) eingelegt, mit dem Domhals (22) durch das Loch (24) gesteckt und aufgeblasen wird, so dass die Vliesauskleidung (18) durch die Innenhülle (20) rundum an der zylindrischen Umfangswand (11) zur Anlage gebracht wird, und danach der Ringspalt zwischen dem Domhals (22) und dem Dom (16) des Lagerbehälters (10) abgedichtet wird.

2. Verfahren nach Anspruch 1, **dadurch gekennzeichnet, dass** die zylindrische Vliesauskleidung (18) mit Endwänden vorkonfektioniert wird.

3. Verfahren nach Anspruch 1 oder 2, **dadurch gekennzeichnet, dass** die zylindrische Vliesauskleidung (30, 32, 34) mit einem Längsschlitz und/oder mit einem oder mehreren Umfangsschlitzen vorkonfektioniert wird.

4. Zylindrischer Lagerbehälter aus Stahlblech oder Kunststoff mit einer Auskleidung (18, 28, 30, 32, 34) aus druckbeständigem Vlies und einer dichten Innenhülle (20), **dadurch gekennzeichnet, dass** die Vliesauskleidung (18, 28, 30, 32, 34) nur durch Eigengewicht und die Innenhülle (20) sowie ggf. Unterdruck im Zwischenraum zwischen der Innenhülle (20) und der Umfangswand des Lagerbehälters (10) an dieser gehalten ist.
